# EUROPEAN PATENT APPLICATION

(11) **EP 4 715 631 A1**
(43) Date of publication of application: **25.03.2026**
(21) Application number: 23942720.6
(22) Date of filing: 26.06.2023
(51) Int. Cl.: G06F 16/36

(54) **METHOD AND APPARATUS FOR CONSTRUCTING INDUSTRIAL KNOWLEDGE GRAPH, AND COMPUTER DEVICE**

(71) Applicant: Siemens Aktiengesellschaft, 80333 München (DE)
(72) Inventor: CHE, Xiaoyin, Beijing 100102 (CN); LIU, Weichuan, Beijing 100102 (CN); LI, Yang, Suzhou, Jiangsu 215000 (CN); NI, Kunyi, Beijing 100102 (CN); LI, Congchao, Suzhou, Jiangsu 215000 (CN)
(74) Representative: Isarpatent
(86) International application number: PCT/CN2023/102458
(87) International publication number: WO 2025/000192

(57) **Abstract**

A method for constructing an industrial knowledge graph. The method comprises: determining a hexagonal-grid layout of an industrial knowledge graph, wherein in the hexagonal-grid layout, each non-edge grid cell is surrounded by six grid cells, and side lines of the six grid cells form a regular hexagon; in the respective centers of a plurality of grid cells in the hexagonal-grid layout, respectively placing a plurality of nodes in the industrial knowledge graph; and on the basis of a connection relationship among the plurality of nodes, using a straight line or a broken line to display the connection among the plurality of nodes. In the present application, a hexagonal-grid layout is used to assist in the display of an industrial knowledge graph, such that content of the industrial knowledge graph can be presented in a complete and clear manner, thereby greatly improving the experience of a user when browsing a knowledge graph..

## Description

### TECHNICAL FIELD

This application relates to the field of knowledge graphs, and in particular, to a method and an apparatus for constructing an industrial knowledge graph, a computer device, and a storage medium.

### BACKGROUND

Knowledge graph (knowledge graph) is a topic that is widely discussed recently in the academic community and the industry field. Knowledge graphs show a great potential in various functional applications, and a significant advantage in interpretability. When a program, an organization, or a bunch of related data is presented, a graph structure formed by nodes and edges inherently embraces logic, and therefore is highly recognized by many customers around the world.

### SUMMARY

The summary part is provided to introduce some selected concepts in a simplified form, and the selected concepts are further described in the following detailed description part. The summary part is not intended to identify any key feature or necessary feature of the claimed subject matter, nor is it intended to be used to help determine the scope of the claimed subject matter.

Based on this, this application provides a method for constructing an industrial knowledge graph, including: determining a hexagonal-grid layout of the industrial knowledge graph, where in the hexagonal-grid layout, each non-edge grid is surrounded by six grids, and side lines of the six grids form a regular hexagon; respectively placing a plurality of nodes from the industrial knowledge graph at respective centers of a plurality of grids in the hexagonal-grid layout; and using, based on a connection relationship among the plurality of nodes, a straight line or a broken line to display connection among the plurality of nodes.

Based on the foregoing method, the hexagonal-grid layout can be used to assist in display of the industrial knowledge graph, so that content of the industrial knowledge graph can be presented in a complete and clear manner through the straight line or the broken line, thereby greatly improving user experience when the knowledge graph is browsed.

Further, the respectively placing a plurality of nodes from the industrial knowledge graph at respective centers of a plurality of grids in the hexagonal-grid layout includes: placing a first node in a first grid of the plurality of grids; placing a second node in a second grid of the plurality of grids, where the second grid is adjacent to the first grid; and sparsifying the second grid in which the second node has been placed.

By using the foregoing method, the nodes can be effectively placed in the hexagonal-grid layout, to make positioning among the nodes more reasonable, and after sparsification, enough space is reserved for subsequent connection lines between the nodes.

Further, the placing a second node in a second grid of the plurality of grids includes: selecting unoccupied second grids one by one to place the second node; and selecting, based on area optimality, the second grid to place the second node.

By using the foregoing method, nodes having the connection relationship with a core node can be reasonably placed one by one around the core node and at proper positions, resulting in a more balanced layout and visual perception.

Further, the selecting unoccupied second grids one by one to place the second node includes: calculating a sum of distances between an unoccupied second grid and all grids in which the nodes have been placed; and selecting an unoccupied second grid with a smallest sum of distances, to place the second node.

By using the foregoing method, the nodes can be placed around the core node as compactly as possible, avoiding excessive space reservation, and making a whole more compact.

Further, the selecting, based on area optimality, the second grid to place the second node includes: calculating a weight of the second grid within a preset range, where the weight includes a shortest total logical distance and a shortest total graphic distance; and selecting, based on the weight, the unoccupied second grid to place the second node.

By using the foregoing method, positions of the nodes can be locally adjusted, so that more positions closer to the core node are found to place the nodes. In addition, the plurality of nodes are prevented from being placed in a same direction of the core node, thereby avoiding an unbalanced layout.

Further, the using a straight line or a broken line to display connection among the plurality of nodes includes: using a straight line or a broken line having a shortest total logical distance, smallest repeated coverage, and a smallest number of inflection points to display the connection among the plurality of nodes.

By using the foregoing method, the connection relationship among the nodes can be clearer and more intuitive, and coverage overlap can be reduced.

In addition, this application further provides a display apparatus of an industrial knowledge graph, including: a layout determining module, configured to determine a hexagonal-grid layout of the industrial knowledge graph, where in the hexagonal-grid layout, each non-edge grid is surrounded by six grids, and side lines of the six grids form a regular hexagon; a node placement module, configured to respectively place a plurality of nodes from the industrial knowledge graph at respective centers of a plurality of grids in the hexagonal-grid layout; and a relationship connection module, configured to use, based on a connection relationship among the plurality of nodes, a straight line or a broken line to display connection among the plurality of nodes.

This application further provides a computer device, including a memory and a processor, where the memory stores a computer program, and the processor, when executing the computer program, implements the foregoing method.

This application further provides a computer-readable storage medium, storing a computer program, where the computer program, when executed by a processor, implements the foregoing method.

This application further provides a computer program product tangibly stored on a computer-readable medium and including computer-executable instructions, the computer-executable instructions, when executed, causing at least one processor to perform the foregoing method.

### BRIEF DESCRIPTION OF THE DRAWINGS

In the accompanying drawings, implementations of the present disclosure are described by using examples rather than limitations, and similar reference numerals in the accompanying drawings represent same or similar components.
FIG. 1 is a schematic flowchart of a method for constructing an industrial knowledge graph according to an implementation of this application.
FIG. 2 is a schematic diagram of a display apparatus of an industrial knowledge graph according to an implementation of this application.
FIG. 3 is a schematic diagram of a computer device used for displaying an industrial knowledge graph according to an implementation of this application.
FIG. 4 is a display effect diagram of an industrial knowledge graph according to an implementation of this application.
FIG. 5 is a display effect diagram of an industrial knowledge graph according to an implementation of this application.
FIG. 6 is a display effect diagram of an industrial knowledge graph according to an implementation of this application.
FIG. 7 is a display effect diagram of an industrial knowledge graph according to an implementation of this application.

Reference numerals are as follows:
Steps S101 to S103
200: Apparatus
201: Module
202: Module
203: Module
204: Module
205: Module
206: Module
207: Module
208: Module
300: Computer device
302: Processor
304: Memory

### DETAILED DESCRIPTION

For the purpose of explanation, a large amount of specific details are described in the specification. However, it may be understood that, an implementation of the present invention may be practiced without the specific details. In other examples, known circuits, structures, and technologies are not disclosed in detail, so as not to affect understanding on the specification.

References to "an implementation", "implementation", "exemplary implementation", "some implementations", "various implementations", and the like throughout the specification indicate that the described implementations of the present invention may include particular features, structures, or characteristics, but do not mean that each implementation necessarily includes the particular features, structures, or characteristics. In addition, some implementations may have some or all of the features described for other implementations, or may have none of the features described for other implementations.

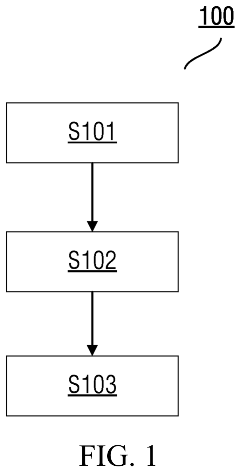

In the following descriptions, terms "couple", "connect" and derivation words thereof may be used. It should be understood that these terms are not intended as synonyms of each other. On the contrary, in a specific implementation, "connect" is used for indicating that two or more components are in direct physical or electrical contact with each other, and "couple" is used for indicating that two or more components cooperate or interact with each other, but they may or may not be in direct physical or electrical contact with each other. FIG. 1 is a flowchart of a generation method according to an implementation of this application.

It should be understood that, although each step of the flowchart in FIG. 1 is displayed sequentially according to arrows, the steps are not necessarily performed according to an order indicated by arrows. Unless otherwise explicitly specified in this application, execution of the steps is not strictly limited, and the steps may be performed in other sequences. Moreover, at least a part of steps in FIG. 1 may include a plurality of steps or a plurality of stages. These steps or stages are not necessarily executed at the same time, but can be executed at different times. The order of execution of these steps or stages is not necessarily performed sequentially, but may be performed in turn or alternately with other steps or at least a part of steps or stages of other steps.

To intuitively display a knowledge graph on a panel, a key problem is how to properly allocate core elements: nodes and edges. Usually, the panel is 2D and orthogonally coordinated (2D and orthogonally coordinated), and the X-Y coordinate system is shared by both distributional calculation and a visual layer (shared by both distributional calculation and visual layer). This causes a serious node overlapping (node overlapping) problem because each node needs to occupy an area larger than distribution coordinates of the node, which may result in covering or overlapping coordinates allocated to other nodes.

However, a knowledge graph demonstration mechanism based on a hexagonal-grid layout can perfectly bypass the problem. By using an additional logical layer of hexagonal coordinates, not only can an area occupied by the node in an original visual layer be strictly maintained, but also an additional visual possibility can be achieved. Therefore, a hexagonal-grid structure can be widely applied to various scenarios, such as advertising flyers, video clipping, and strategy games.

In the foregoing case, node deployment of the knowledge graph should be completed on the logical layer by using the hexagonal coordinates. To resolve this problem, a new and complete mechanism is correspondingly provided. In the mechanism, analysis is first performed, all to-be-allocated nodes are divided into several batches, and then all the to-be-allocated nodes are gradually allocated to a hexagonal panel through certain setting. After positions of all the nodes are determined, through a modified pathfinding algorithm, the mechanism is implemented in a form of a straight line or an obtuse-angled broken line by using a connection relationship (or a connection line). The foregoing proposed method is theoretically applicable to all types of knowledge graph data, but is more applicable to a case in which a quantity of elements is limited, because a finally presented visual result easily becomes compact (compact).

Based on this, this application provides a method for constructing an industrial knowledge graph, including the following steps:
S101: Determine a hexagonal-grid layout of the industrial knowledge graph, where in the hexagonal-grid layout, each non-edge grid is surrounded by six grids, and edge lines of the six grids form a regular hexagon.

In embodiments of the present disclosure, the hexagonal-grid layout is used to assist in display of the industrial knowledge graph, where the hexagonal-grid layout includes a plurality of grids of the same size. A hexagon is a shape having stable geometrical features. In the hexagonal-grid layout, the plurality of grids of the same size are arranged without gaps. Further, regarding the hexagonal-grid layout of the industrial knowledge graph, in the hexagonal-grid layout, each non-edge grid is surrounded by six grids. For each non-edge grid in the hexagonal-grid layout, each grid is completely surrounded by six surrounding grids. It should be understood that an edge line in the hexagonal-grid layout exists logically, but the edge line may be presented visually, or may be hidden. In some embodiments, the hexagonal-grid layout may correspond to a hexagonal-grid logical coordinate system. Optionally, each grid in the hexagonal-grid layout may be the hexagon, and a hexagon formed by centers of the six grids is an equilateral hexagon. Each grid has the same shape and size. Each grid in the hexagonal-grid layout is the hexagon, a central grid is surrounded by six adjacent grids, to form a regular hexagon, and nodes in the industrial knowledge graph are located at a center of one or more grids in the six grids.

In some embodiments, all grids have the same shape and size. The non-edge grid is closely adjacent to six surrounding grids, with no or almost no gaps between the grids. Centers of the six adjacent grids form the hexagon, and the hexagon may be an equilateral or non-equilateral hexagon. The hexagonal-grid layout may be theoretically extended when satisfying the foregoing condition. In some embodiments, a quantity of the grids in the hexagonal-grid layout is more than twice a quantity of the nodes.

S102: Respectively place a plurality of nodes from the industrial knowledge graph at respective centers of a plurality of grids in the hexagonal-grid layout.

The hexagonal-grid layout includes a plurality of grids of the same size, and each node is positioned at a center of a grid. The nodes are connected through edges (edge) or connection lines based on a semantic relationship. In some embodiments, a geometric center of the node coincides with a geometric center of the grid, and a size of the node needs to be smaller than a size of the grid, to ensure that different nodes do not overlap. According to the industrial knowledge graph in this embodiment of the present disclosure, semantics represented by the nodes include, but are not limited to an entity such as an industrial mechanism, a facility, a production line, a device, a component, a tag number, a signal, a product, a person, an project, an item, a task, or an event, and an abstract description (such as a fault phenomenon, a fault cause, or a solution) or a technical noun (such as a technology, an algorithm, or an operation step) that describe a particular industrial phenomenon. According to this embodiment of the present disclosure, each node is positioned inside a grid in the hexagonal-grid layout. One node cannot occupy a plurality of grids, nor can be positioned in an area outside the hexagonal-grid layout. Logically, two nodes are not placed in the same grid, to ensure that the nodes do not visually overlap and do not block each other, thereby improving user experience. In some embodiments, adjacent nodes may be positioned in adjacent (neighboring) grids, or may be positioned in non-adjacent (non-neighboring) grids.

S103: Use, based on the connection relationship among the plurality of nodes, a straight line or a broken line to display connection among the plurality of nodes

Based on a semantic relationship among the plurality of nodes, the following straight line or broken line is used to display the connection relationship among the plurality of nodes. For example, the straight line or the broken line may be used to connect two nodes in the industrial knowledge graph based on a semantic relationship between the nodes. In this embodiment of the present disclosure, various connection lines may be used to display the connection relationship, and lengths of the connection lines may be different, and connection manners may also be different, so that the connection lines may intersect with each other.

In this embodiment of this application, the hexagonal-grid layout is used to assist in display of the industrial knowledge graph, each node is displayed at the center of each grid, and various optional connection lines are used to display edges (edge) between the nodes, to present content of the industrial knowledge graph in a complete and clear manner, thereby greatly improving user experience when the knowledge graph is browsed. The hexagonal-grid layout can be used for normalizing a distribution manner of the nodes in a particular view, to avoid suboptimal visual effects.

Further, the respectively placing a plurality of nodes from the industrial knowledge graph at respective centers of a plurality of grids in the hexagonal-grid layout includes: placing a first node in a first grid of the plurality of grids; placing a second node in a second grid of the plurality of grids, where the second grid is adjacent to the first grid; and sparsifying the second grid in which the second node has been placed. By using the foregoing method, the nodes can be effectively placed in the hexagonal-grid layout, to make positioning among the nodes more reasonable, and after sparsification, enough space is reserved for subsequent connection lines between the nodes.

Specifically, first, all nodes that need to be connected are set to a separate set. In this way, the nodes are grouped into different sets based on a connection status. For example, a total quantity of the nodes is 50, 40 nodes have mutual connection relationships, or have edges (edge), to become a first set, and the other 10 nodes have connection relationships, to naturally become a second set. Any node in the first set has no connection relationship with any node in the second set. Then, the sets are sorted in descending order based on the quantity of the nodes in the sets. For example, the first set ranks before the second set because the quantity of the nodes in the first set is larger than the quantity of the nodes in the second set. As described above, in some embodiments, the quantity of the grids (grid) is more than twice the quantity of the nodes (component). In the foregoing implementation, an algorithm language description is used to correspond to lines 1 to 3 of code in Table 1.

Then, for each set (corresponding to line 4 in the following code), the first node is selected and placed in the first grid, or in other words, the first node is placed in the first grid of the plurality of the grids. Then, other nodes in the set are grouped into batches (batch) based on a quantity of hops (hops) to the first node, to form different batches. Then, the different batches are sorted in ascending order based on the quantity of hops. To be specific, a batch with a smaller quantity of hops ranks before a batch with a larger quantity of hops. In other words, the smaller quantity of hops indicates a shorter distance between the node and the first node. The algorithm language description is used to correspond to lines 5 to 7 of the code in Table 1 below.

The selected first node may be referred to as a core node. Selection of the first node may be determined through various methods, for example, a manually formulated rule, automatic calculation, or manual assignment, to adapt to different application scenarios. Specific examples are as follows:
(1) Hub node (Hub node): a node having the largest quantity of connection lines with other nodes is selected as the first node.
(2) Root node (Root node): a node whose average quantity of hops to all other nodes is the smallest value.
(3) Central node (Central node): a node with the smallest quantity of formed batches.
(4) Focus node (Focus node): a node that a user directly searches for (directly searched), or a node specified by another operation.
(5) Random node (Random node): any node randomly selected.

In some embodiments, after the core node is selected, the core node is placed in a centered empty grid (centralized empty grid) on an initial panel, and is directly locked (locked).

Further, the second node is placed in the second grid of the plurality of grids. The second node is the foregoing node grouped into batches based on the core node, and is placed around the first grid in a batch sequence. The placing a second node in a second grid of the plurality of grids specifically includes: selecting unoccupied second grids one by one to place the second node; and selecting, based on area optimality, the second grid to place the second node. By using the foregoing method, nodes having the connection relationship with the core node can be reasonably placed one by one around the core node and at a proper position, resulting in a more balanced layout and visual perception. The algorithm language description is used to correspond to lines 8 to 12 of the code in Table 1.

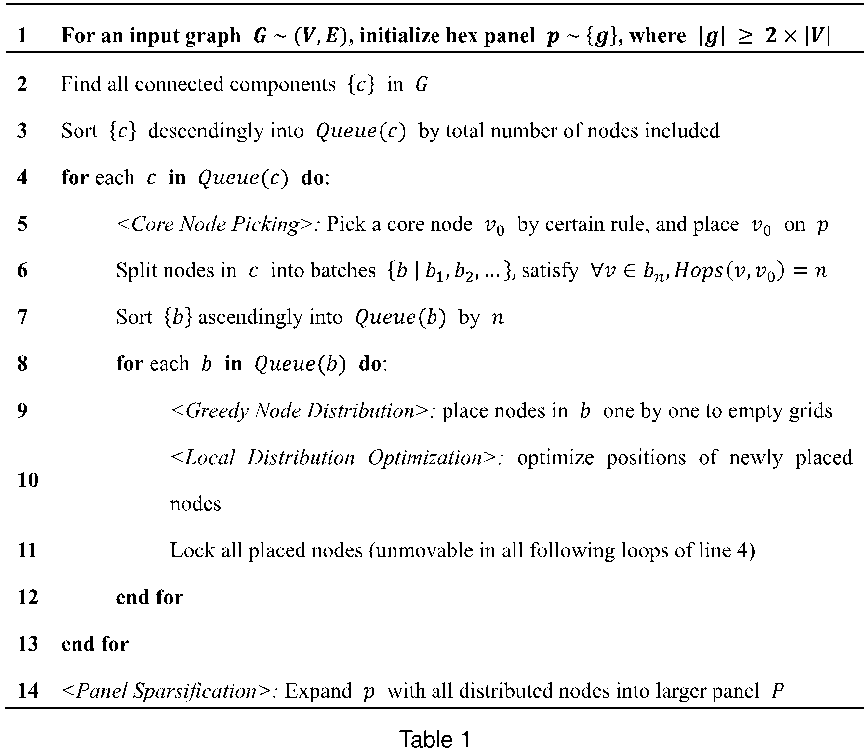

The unoccupied second grids are selected one by one to place the second node, which may also be referred to as greedy node distribution (Greedy Node Distribution). An embodiment of a specific placement manner is as follows:
First, it is defined that any node in each batch has a corresponding set of previously (completely) placed nodes. The set of previously (completely) placed nodes is a non-empty set because the previously placed first node exists in the non-empty set as an element of the non-empty set. In addition, a node in the set of previously completely placed nodes (or a completely placed node for short) certainly has a connection relationship with any node in a set of nodes not being placed just now. It should be noted that in some embodiments, after the second node is placed in the second grid, the second grid is not locked. In other words, based on region distribution optimization, the second grid may alternatively be modified or another second grid may alternatively be selected to place the second node again.

Then, for each batch distinguished based on the quantity of hops, in this batch, the nodes are sorted based on a quantity of connection lines of the nodes. Subsequently, for each node sequentially, grids occupied by nodes that are associated with the node and has been placed serve as anchors (anchor), and empty grids at these adjacent positions of the anchor grids are used as candidate grids. There may be a plurality of candidate grids. Then, for each candidate grid, a logical distance between the candidate grid and each anchor grid (a grid occupied by the completely placed node) is calculated, and logical distances are added to obtain a total logical distance of the candidate grid. Then, a candidate grid having the shortest total logical distance is used as the second grid or a temporary second grid, to place the second node. If a plurality of candidate grids have the same shortest total logical distance, any one of the candidate grids is selected as the second grid or referred to as the temporary second grid. Finally, the placed node may be classified into the set of the completely placed nodes, and prepared as a related anchor of a next node not being placed. To sum up the foregoing description, the selecting unoccupied second grids one by one to place the second node includes: calculating a sum of distances between the second grid and all grids in which the nodes have been placed; and select a second grid with a minimum sum of the distances, to place the second node. By using the foregoing method, the nodes can be placed around the core node as compactly as possible, avoiding excessive space reservation, and making a whole more compact. A specific algorithm language description is as follows:

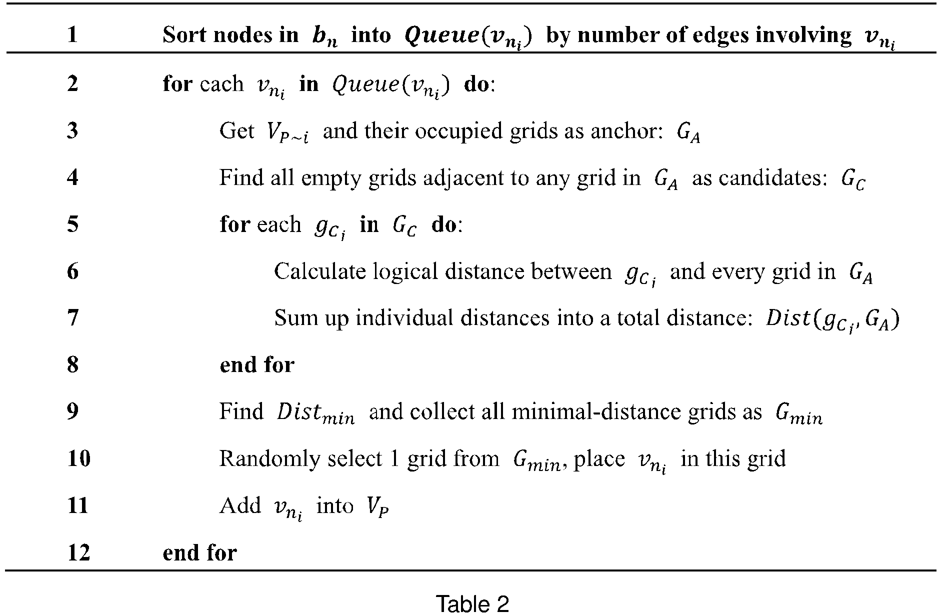

Further, further selecting, based on area optimality, the second grid to place the second node includes the following steps:
First, for each of the foregoing placed second nodes, a search range (search range) of available grids, or a search set of available grids may be set. Weight (weight) calculation is performed on each grid within the search range, regardless of whether the grid is occupied. The weight calculation mainly includes two methods: (a) logical distance and (b) graphic distance. Then, a grid with the best weight (best weight) is selected as a new placement position of the second node, or a new second grid. Three cases may occur:
1. The new position is an original position or an original grid, and the second node does not need to be moved (no need to move).
2. The new position is an unoccupied grid, and the second node is moved to the grid or the position.
3. The new position is a position or a grid that is already occupied by another node, but an occupying node is also a node that needs to be adjusted and moved through the area optimality, and may be referred to as a second transposed node. In other words, if a position of the second transposed node is not locked, positions or grids of the two nodes are swapped (swap). Then, a new weight of the second transposed node at a post-swap position and an old weight at an original position are calculated. If the new weight is not worse (not worse) than the old weight, or the new weight is better than the old weight, a result of this swapping operation (swapping operation) is permanently reserved. On the contrary, if the new weight is worse than the old weight, or the new weight is not better than the old weight, the swap is canceled. The two nodes return to original positions, and a new position of the second node is searched for again by using the three cases mentioned above.

If the quantity of the grids is not excessively large, or a hardware calculation capability is strong enough, a search range within the area optimality may be all grids. However, to control calculation costs or for another purpose, it may be suggested that a distance between the search range and the original position is less than or equal to a certain threshold, for example, the distance is less than 2. The search range may include the original position of the original second node, but needs to exclude those second grids that have been locked through the area optimality previously.

Further, calculation or formula of the weight may be flexibly defined. However, in some embodiments, a specific calculation standard is as follows:
1. A total logical distance is the shortest, where the total logical distance is a sum of logical distances to all anchor grids.
2. A total graphic distance is the shortest.
3. A graphic distance to a center of the hexagonal-grid layout (center of the panel) is the shortest.

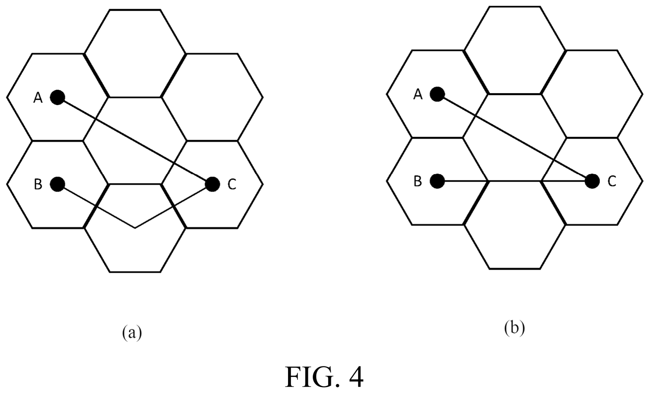

For example, as shown in FIG. 4, (a) represents the logical distance, and (b) represents the graphic distance. In (a), a logical distance between a node a and a node c is 2, and a logical distance between a node b and the node c is also 2. In (b), a graphic distance between a node a and a node c is 2√3*r, and a graphic distance between a node b and the node c is 3•r. r represents a distance from a center of a hexagon to any endpoint of the hexagon.

Further, after all unlocked second nodes are processed, a finally obtained layout is compared with an initial layout. If no second node moves in this round of processing, a processing procedure of the area optimality is exited.

Otherwise, when a second node moves in this round, a next round of processing procedure of the area optimality is continued or triggered. To prevent some second nodes from swapping positions only back and forth without essential location optimization swap, a threshold is set. After a quantity of rounds reaches some thresholds, exit may be triggered.

To sum up the foregoing description, the selecting, based on area optimality, the second grid to place the second node includes: calculating a weight of the second grid within a preset range, where the weight includes the shortest total logical distance and the shortest total graphic distance; and selecting, based on the weight, the second grid to place the second node. By using the foregoing method, positions of the nodes can be locally adjusted, so that the nodes find more positions at which the nodes are placed closer to the core node. In addition, the plurality of nodes are prevented from being placed in a same direction of the core node, thereby avoiding an unbalanced layout.

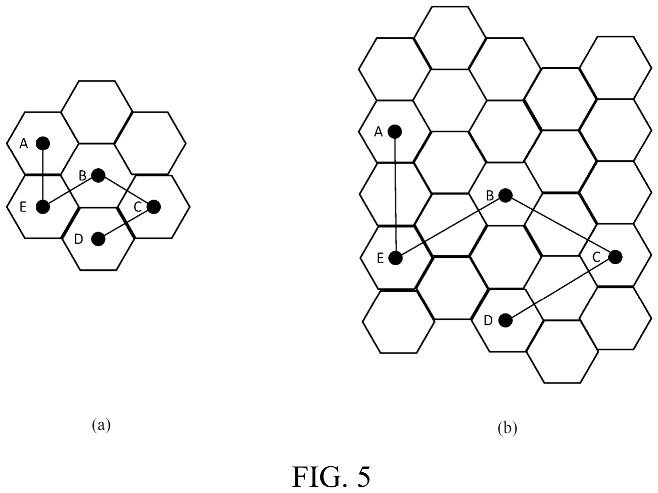

Further, the second grid in which the second node has been placed is sparsified, to reserve enough space for subsequent connection lines between the nodes after sparsification. A specific manner includes the following step:
After the positions of all second nodes are locked, a distance between the second grids needs to be expanded (expand). The expansion may be understood as proportional scaling, and a relative position among the second grids and the formed shape remain unchanged. In some embodiments, a hexagonal-grid layout after the sparsification should have a same hexagonal coordinate system as the hexagonal-grid layout before the sparsification. In other words, position coordinates of all placed nodes and a panel boundary are multiplied by an integer scaling coefficient (scaling coefficient) greater than 1. A sparsification process is also to reserve enough blank space for subsequent connection lines between the nodes after sparsification, to ensure visual clarity and intuitiveness. The specific algorithm language description is as shown in line 14 of the foregoing Table 1. For example, as shown in FIG. 5, (a) represents a panel layout before sparsification, (b) represents a panel layout after sparsification, and a scaling coefficient for sparsification is 2.

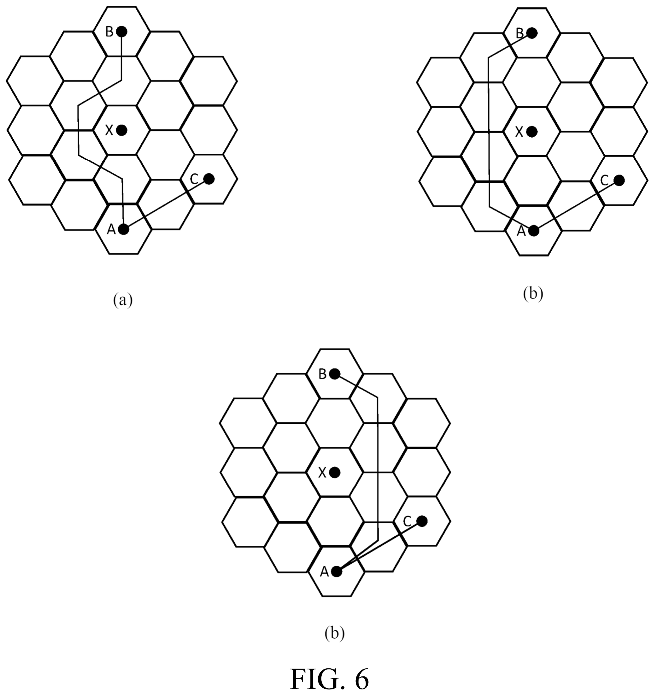

Further, a straight line or a broken line having a shortest total logical distance, smallest repeated coverage, and a smallest number of inflection points is used to display the connections among the plurality of nodes. By using the foregoing method, the connection relationship among the nodes can be clearer and more intuitive, and coverage overlap can be reduced. For example, shown in FIG. 6, (b) is a relatively optimal selection because (b) has fewer inflection points or bends than (a), and has less overlapping parts than (c).

In some embodiments, determining which grids an edge or a connection line between a pair of nodes should pass through is a typical pathfinding (pathfinding) problem. Many mature algorithms may be applied, for example, a Dijkstra algorithm or an A* algorithm. A logical distance between hexagonal grids may be used as a cost (cost) during calculation. There is no great difference between these algorithms based on a final outputted result, that is, a shortest path (shortest path). In this proposal, it is recommended to use the A* algorithm.

Specifically, in a selection scheme of the connection line, the following factors may be considered: 1. The total logical distance is the shortest, which is a precondition. 2. Overlapping parts are as less as possible (less overlapping parts). 3. Inflection points are as few as possible. 4. When all the foregoing three conditions are met, any one is selected.

In some implementations, the "less overlapping parts" may dynamically change based on another connection relationship or connection situation. Therefore, similar to the manner of "area optimality" mentioned above, a plurality of rounds of procedures and comparison processes are used to select an optimal connection line. For example, in a first round, a simple shortest path is selected or applied without another selection scheme or selection factor. Then, an overall overlapping status is calculated, and an optimization round with a selection scheme activated is initialized (count the overall overlapping status and initialize an optimization round with selection scheme activated). If a path or a connection line does not change in this process, an entire selection process is exited, or otherwise, another round of optimization is triggered. In some embodiments, a maximum quantity of round threshold is also set to terminate the selection process of the path or the connection.

In some embodiments, a knowledge graph (Knowledge Graph) deployment mechanism in this application may be divided into two main phases: 1) Node deployment (node distribution) is executed in batches (with batch execution) on a blank hexagon panel. (2) An implementation of the edge (edge) is based on a broken line having an obtuse (obtuse) angle of a modified pathfinding algorithm (modified pathfinding algorithm). Theoretically, an inputted knowledge graph may be of any valid shape or data volume. However, in some embodiments, it is recommended to keep the knowledge graph at a limited size based on features of this application, for example, less than 100 nodes. For definitions of nodes, or connected components (connected component), and hops (hops) in a graph theory (graph theory), reference may be made to general public understanding. In some embodiments of this application, a size and a shape of the inputted knowledge graph and a quantity of connection components should be very small, and in most cases, the inputted knowledge graph should be a connection graph itself.

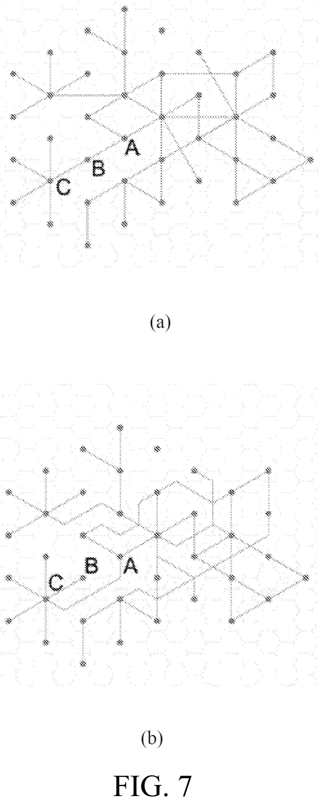

In some embodiments, an implementation of implementing the connection relationship by using the obtuse-angled broken line includes the following steps: After positions of the panel and all nodes are confirmed, a next step is to implement connection, so that display of the knowledge graph is completed. It is assumed that if only the straight line is used to represent the connection relationship, not only may cross of some straight lines at irregular angles in the knowledge graph affect visual experience, but a problem that the straight line may produce chaotic expression in a particular case is more unignorable. For example, some straight lines may completely visually overlap some other straight lines. However, if the obtuse-angled broken line is used, the confusion can be completely avoided. For example, in some embodiments, by representing the connection relationship by using the broken line, connection relationships represented by the straight line can be bypassed, and because the panel is previously sparsified, there are always empty grids reserved for the broken lines to be bent. As shown in FIG. 7, (a) represents an effect that only straight lines are used for connection, and (b) represents an effect that a connection line with an obtuse angle is used for displaying the knowledge graph if it is necessary.

However, there may be a plurality of shortest paths, and the shortest paths have completely the same logical distance, but only one shortest path may be presented as an exemplary connection relationship. Therefore, a further selection scheme is used in this application. The selection scheme may be described by using the following conditions (arranged in order): (1) shortest total logical distance (precondition); (2) less overlapping parts, as shown in FIG. 6, no overlapping part between (a) and (b), and one part in (c); and (3) few inflection points, as shown in FIG. 6, four inflection points in (a), and two inflection points in both (b) and (c). If a plurality of options are still available at this time, any path is selected.

The method for deploying the nodes of the knowledge graph disclosed in this application is innovative and attractive, and specifically has the following features: (1) Graph algorithms (graph algorithms) are actually applied to application of the knowledge graph. (2) By means of a suggested deployment manner, the nodes of the knowledge graph are properly placed on the hexagonal panel, to create a knowledge presentation with a clear visual perception on the whole. (3) The method of this application is very flexible for various visual designs, so that style switching is very easy, to adapt to different customer requirements.

The hexagonal grid structure used for displaying the knowledge graph is an innovation of this application, and is easily visually recognized. The method of this application can be detected mainly in two ways: (1) In node distribution, the nodes are evenly distributed (nodes are distributed unevenly through most or almost all other knowledge graph demonstration tools), and there is always an empty buffer (buffer) grid between the nodes. (2) Regarding the implementation of the connection relationship, if the connection line has a straight line or an obtuse broken line (a 120° breakpoint), an intersection degree is highly standardized, like a subway map.

In some implementations, the knowledge graph may alternatively be displayed in a 3D mode. In the 3D mode, the node may be a three-dimensional node model. A line or an edge connecting the nodes may be the straight line or the broken line, or may be an arch-shaped line. The arch-shaped line may be a line with a radian, similar to a shape of an arch bridge, and connects two node models.

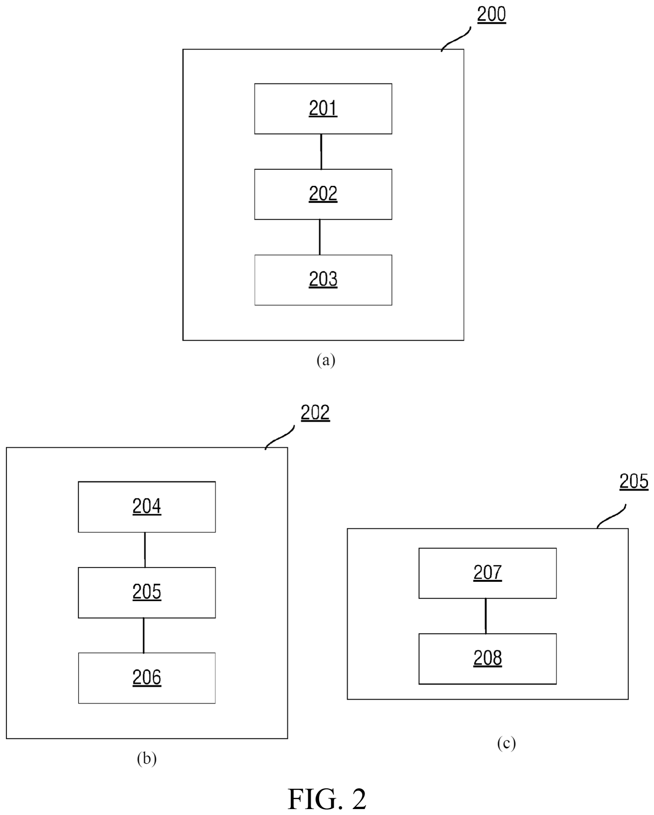

FIG. 2 (a) provides a display apparatus 200 of an industrial knowledge graph. The apparatus 200 includes: a layout determining module 201, configured to determine a hexagonal-grid layout of the industrial knowledge graph, where in the hexagonal-grid layout, each non-edge grid is surrounded by six grids, and edge lines of the six grids form a regular hexagon; a node placement module 202, configured to respectively place a plurality of nodes from the industrial knowledge graph at respective centers of a plurality of grids in the hexagonal-grid layout; and a relationship connection module 203, configured to use, based on a connection relationship among the plurality of nodes, a straight line or a broken line to display connection among the plurality of nodes.

Further, as shown in FIG. 2(b), the node placement module 202 further includes: a first grid selection module 204, configured to place a first node in a first grid of the plurality of grids; a second grid selection module 205, configured to place a second node in a second grid of the plurality of grids, where the second grid is adjacent to the first grid; and a second grid sparsifying module 206, configured to sparsify the second grid in which the second node has been placed.

Further, as shown in FIG. 2(c), the second grid selection module 205 includes: a one-by-one selection module 207, configured to select unoccupied second grids one by one to place the second node; and an area selection module 208, configured to select, based on area optimality, the second grid to place the second node.

Further, the one-by-one selection module 207 is configured to: calculate a sum of distances between the second grid and all second grids in which the second nodes has been placed, and select a second grid with a smallest sum of distances, to place the second node.

Further, the area selection module 208 is configured to calculate a weight of the second grid within a preset range, where the weight includes a shortest total logical distance and a shortest total graphic distance; and select, based on the weight, the second grid to place the second node.

Further, the relationship connection module 203 is configured to use a straight line or a broken line having a shortest total logical distance, smallest repeated coverage, and a smallest number of inflection points to display the connection among the plurality of nodes.

It should be noted that the apparatus may include more or fewer modules to implement the described functions. For example, at least one module in FIG. 2 may be further divided into a plurality of different submodules, and each submodule is configured to perform at least a part of operations described herein with reference to the corresponding module. In addition, in some examples, the apparatus 200 may further include an additional module, configured to perform another operation already described in the specification. In addition, a person skilled in the art may understand that the exemplary apparatus 200 may be implemented by using software, hardware, firmware, or any combination thereof.

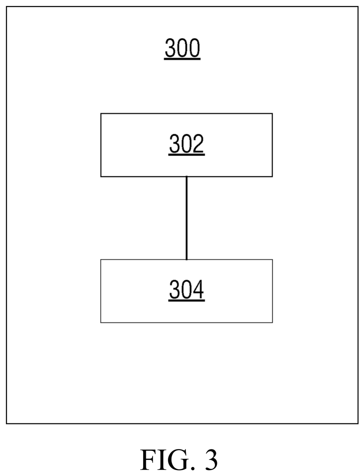

FIG. 3 provides a computer device. According to an implementation, a computer device 300 may include a processor 302, where the processor 302 executes a computer program stored in a memory 304. The computer program implements the foregoing method when being executed by the processor.

A person skilled in the art may understand that the structure shown in FIG. 3 is only a block diagram of a partial structure related to a solution in this application, and FIG. 3 does not constitute a limitation to the computer device to which this application is applied. Specifically, the computer device may include more components or fewer components than those shown in FIG. 3, or some components may be combined, or a different component deployment may be used.

A person of ordinary skill in the art may understand that all or some of procedures of the method in the foregoing implementations may be implemented by a computer program instructing relevant hardware. The computer program may be stored in a non-volatile computer-readable storage medium. When the computer program is executed, the procedures of the foregoing method implementations may be implemented. References to the memory, the storage, the database, or other medium used in the implementations provided in this application may all include at least one of a non-volatile memory or a volatile memory. The non-volatile memory may include a read-only memory (Read-Only Memory, ROM), a magnetic tape, a floppy disk, a flash memory, an optical memory, or the like. The volatile memory may include a random access memory (Random Access Memory, RAM) or an external high-speed cache. By way of illustration rather than limitation, the RAM may be in various forms, such as a static random access memory (Static Random Access Memory, SRAM) or a dynamic random access memory (Dynamic Random Access Memory, DRAM).

This application further provides a computer-readable storage medium, storing a computer program, where the foregoing steps are implemented when the computer program is executed by a processor.

This application further provides a computer program product tangibly stored on a computer-readable medium and including computer-executable instructions, the computer-executable instructions, when executed, causing at least one processor to perform the foregoing method.

Further, the computer program may be stored and run in a cloud to perform the method. Further, constituent parts of the program may be laid out on a plurality of devices or clouds. For example, corresponding steps may be laid out and run on a local computer, or run on different cloud devices, to transmit a signal through communication connection, or may be laid out and run on a local computer. This application does not limit the manner or method, and a corresponding technology may be flexibly laid out and deployed, and the method is executed and completed by fully using devices and technologies such as a cloud, big data, and a super-computing capability.

Some implementations of the present disclosure may include a product. The product may include a storage medium, which is configured to store logic. Examples of the storage medium may include one or more types of computer-readable storage media that can store electronic data, including a volatile memory or a non-volatile memory, a removable or non-removable memory, an erasable or non-erasable memory, a writable or rewritable memory, and the like. Examples of the logic may include various software units, such as a software component, a program, an application, a computer program, an application program, a system program, a machine program, operating system software, middleware, firmware, a software module, a routine, a subroutine, a function, a method, a process, a software interface, an application programming interface (API), an instruction set, calculation code, computer code, a code segment, a computer code segment, a word, a value, a symbol, or any combination thereof. In some implementations, for example, the product can store executable computer program instructions, and the executable computer program instructions, when executed by the processor, cause the processor to perform the method and/or operation described in this specification. The executable computer program instructions may include code of any suitable type, such as source code, compiled code, interpreted code, executable code, static code, and dynamic code. The executable computer program instructions may be implemented based on a pre-defined computer language, method, or syntax used for instructing a computer to execute a specific function. The instructions may be implemented by using any suitable high-level, low-level, object-oriented, visual, compiled, and/or interpreted programming language.

The foregoing descriptions include examples of the disclosed architecture. Certainly, it is not possible to describe every conceivable combination of components and/or methods, but a person skilled in the art may understand that many other combinations and permutations are also feasible. Therefore, the novel architecture is intended to cover all such substitutes, modifications, and variations that fall within the spirit and scope of the appended claims.

## Claims

1. A method for constructing an industrial knowledge graph, comprising:
determining a hexagonal-grid layout of the industrial knowledge graph, wherein in the hexagonal-grid layout, each non-edge grid is surrounded by six grids, and edge lines of the six grids form a regular hexagon;
respectively placing a plurality of nodes from the industrial knowledge graph at respective centers of a plurality of grids in the hexagonal-grid layout; and
using, based on a connection relationship among the plurality of nodes, a straight line or a broken line to display connection among the plurality of nodes.

2. The method according to claim 1, wherein the respectively placing a plurality of nodes from the industrial knowledge graph at respective centers of a plurality of grids in the hexagonal-grid layout comprises:
placing a first node in a first grid of the plurality of grids;
placing a second node in a second grid of the plurality of grids, wherein the second grid is adjacent to the first grid; and sparsifying the second grid in which the second node has been placed.

3. The method according to claim 2, wherein the placing a second node in a second grid of the plurality of grids comprises:
selecting unoccupied second grids one by one to place the second node; and
selecting, based on area optimality, the second grid to place the second node.

4. The method according to claim 3, wherein the selecting unoccupied second grids one by one to place the second node comprises:
calculating a sum of distances between an unoccupied second grid and all grids in which nodes have been placed; and
selecting an unoccupied second grid with a smallest sum of distances, to place the second node.

5. The method according to claim 3, wherein the selecting, based on area optimality, the second grid to place the second node comprises:
calculating a weight of the second grid within a preset range, wherein the weight comprises a shortest total logical distance and a shortest total graphic distance; and selecting, based on the weight, the unoccupied second grid to place the second node.

6. The method according to claim 3, wherein the using a straight line or a broken line to display connection among the plurality of nodes comprises:
using a straight line or a broken line having a shortest total logical distance, smallest repeated coverage, and a smallest number of inflection points to display the connection among the plurality of nodes.

7. A display apparatus (200) of an industrial knowledge graph, comprising:
a layout determining module (201), configured to determine a hexagonal-grid layout of the industrial knowledge graph, wherein in the hexagonal-grid layout, each non-edge grid is surrounded by six grids, and edge lines of the six grids form a regular hexagon;
a node placement module (202), configured to respectively place a plurality of nodes from the industrial knowledge graph at respective centers of a plurality of grids in the hexagonal-grid layout; and
a relationship connection module (203), configured to use, based on a connection relationship among the plurality of nodes, a straight line or a broken line to display connection among the plurality of nodes.

8. The apparatus according to claim 7, wherein the node placement module (202) further comprises:
a first grid selection module (204), configured to place a first node in a first grid of the plurality of grids;
a second grid selection module (205), configured to place a second node in a second grid of the plurality of grids, wherein the second grid is adjacent to the first grid; and
a second grid sparsifying module (206), configured to sparsify the second grid in which the second node has been placed.

9. The apparatus according to claim 8, wherein the second grid selection module (205) comprises:
a one-by-one selection module (207), configured to select unoccupied second grids one by one to place the second node; and
an area selection module (208), configured to select, based on area optimality, the second grid to place the second node.

10. The apparatus according to claim 9, wherein the one-by-one selection module (207) is configured to:
calculate a sum of distances between the unoccupied second grids and all grids in which nodes have been placed; and
select an unoccupied second grid with a smallest sum of distances, to place the second node.

11. The apparatus according to claim 9, wherein the area selection module (208) is configured to: calculate a weight of the second grid within a preset range, wherein the weight comprises a shortest total logical distance and a shortest total graphic distance; and select, based on the weight, the unoccupied second grid to place the second node.

12. The apparatus according to claim 7, wherein the relationship connection module (203) is configured to:
use a straight line or a broken line having a shortest total logical distance, smallest repeated coverage, and a smallest number of inflection points to display the connection among the plurality of nodes.

13. A computer device, comprising a memory and a processor, wherein the memory stores a computer program, and the processor, when executing the computer program, implements steps of the method according to any one of claims 1 to 6.

14. A computer-readable storage medium, storing a computer program, wherein the computer program, when executed by a processor, implements steps of the method according to any one of claims 1 to 6.

15. A computer program product, tangibly stored on a computer-readable medium and comprising computer-executable instructions, the computer-executable instructions, when executed, causing at least one processor to perform the method of any one of claims 1 to 6.
